# EUROPEAN PATENT APPLICATION

(11) **EP 4 593 153 A1**
(43) Date of publication of application: **30.07.2025**
(21) Application number: 25153536.5
(22) Date of filing: 23.01.2025
(51) Int. Cl.: H01M 10/42

(54) **AFE CHIP WITH SYNCHRONOUS VOLTAGE SAMPLING AND BATTERY MANAGEMENT SYSTEM**

(30) Priority: 23.01.2024 CN 202410092996
(71) Applicant: Joulwatt Technology Co., Ltd., Hangzhou, Zhejiang Province 310030 (CN)
(72) Inventor: LU, Yating, Hangzhou, 310030 (CN); ZHANG, Zhuhaobo, Hangzhou, 310030 (CN); ZHANG, Yan, Hangzhou, 310030 (CN)
(74) Representative: Bals & Vogel Patentanwälte PartGmbB

(57) **Abstract**

The present disclosure provides an AFE chip with synchronous voltage sampling function and a battery management system. N AFE chips are coupled respectively with n battery units, and the first to nth AFE chips are cascaded in a daisy chain. An i-th AFE chip calculates an i-th delay time tdi according to the time point tit when the i-th AFE chip transmits first broadcast command information and the time point tir when it receives response information, and according to a first time T1; where 1 ≤ i < n. The first time T1 represents a time difference between the time point tn' when the n-th AFE chip receives the first broadcast command information and the time point tnt when it transmits the response information. The i-th AFE chip executes second broadcast command information, after the i-th AFE chip receives the second broadcast command information and delays for the i-th delay time tdi; and the n-th AFE chip executes the second broadcast command information at the time point when receiving the second broadcast command information. The second broadcast command information is a voltage sampling command to ensure approximately synchronous voltage sampling timings of the n AFE chips.

## Description

### TECHNICAL FIELD

The present disclosure relates to the field of battery voltage management, and more specifically, to an AFE chip with synchronous voltage sampling function and a battery management system.

### BACKGROUND

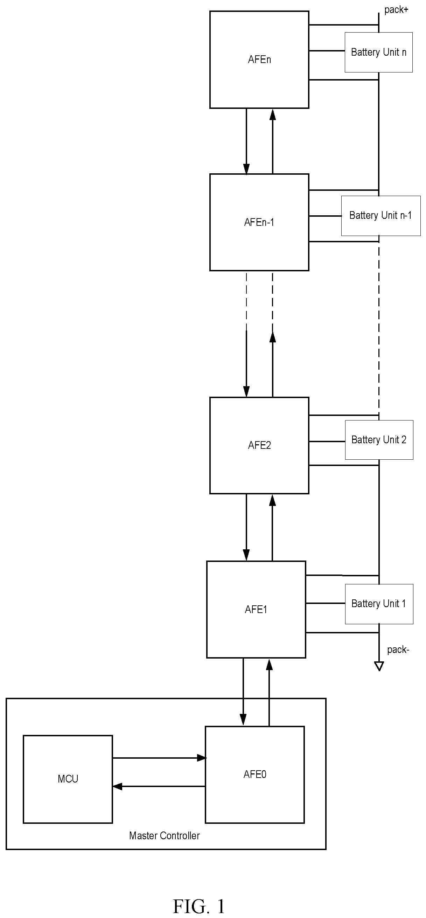

In the field of battery management, as shown in FIG. 1, the battery management system generally includes n AFE (Analog Front End) chips and n battery units, n is a natural number greater than 1. The n AFE chips are coupled respectively with n battery units to achieve the monitoring of the corresponding battery units, and n battery units constitute a high-voltage battery pack with a positive terminal pack+ and a negative terminal pack- for powering a subsequent load. Here, the first to the n-th AFE chips are cascaded in a daisy chain, and two adjacent AFE chips can communicate with each other in two directions; However, due to serial communication, each AFE chip receives the command information at different times. The AFE chip closer to the top position of the daisy chain (in Figure 1, the AFE chip labeled as AFEn is at the top of the daisy chain) will receive the command information later. When the command information is a voltage sampling command, the different timing at which the AFE chips receive the command information will cause the n AFE chips to sample the voltage at different times. This inconsistency in voltage sampling times will result in inaccurate calculations of parameters such as battery capacity based on the sampled data, which in turn will impact the battery's health status or lifespan. Therefore, it is necessary to solve the existing problems in the conventional approach.

### SUMMARY

In order to solve the above technical problems, the present disclosure provides an AFE chip with synchronous voltage sampling function and a battery management system.

According to a first aspect of the present disclosure, there is provided an AFE chip with synchronous voltage sampling function, applied in a battery management system, which includes n battery units, n AFE chips, and a master controller, where n is a natural number greater than 1; the n AFE chips are coupled respectively with the n battery units, and the first to n-th AFE chips are cascaded in a daisy chain; after the first AFE chip receives first broadcast command information from the master controller, the first broadcast command information is sequentially transmitted to the second to the n-th AFE chips through cascading communication; the response information from the n-th to first AFE chips is transmitted to the master controller through the cascading communication; characterized in that

an i-th AFE chip comprises a transmission delay calculation module i, which calculates transmission delay according to the time point tit when the i-th AFE chip transmits the first broadcast command information and the time point tir when it receives the response information, and calculates the i-th delay time tdi based on a first time T1; where 1 <, i < n. the first time T1 represents a time difference between the time point when the n-th AFE chip receives the first broadcast command information and the time point tnt when it transmits the response information;

the i-th AFE chip further comprises a delay module i; and the i-th AFE chip executes second broadcast command information, after the i-th AFE chip receives the second broadcast command information and delays for the i-th delay time tdi by the delay module i; and the n-th AFE chip executes the second broadcast command information at the time point when receiving the second broadcast command information; the second broadcast command information is a voltage sampling command to ensure approximately synchronous voltage sampling timings of the first to n-th AFE chips.

Optionally, the i-th delay timed = (T2-T1)/2, where T2 is a time difference between the time point tir and the time point tit.

Optionally, the i-th AFE chip further comprises a register i, and the first time T1 is a preset time and is stored in the register i.

Optionally, after obtaining the i-th delay time tdi, it is stored in the register i;
when the i-th AFE chip receives the second broadcast command information, the i-th delay time tdi is retrieved from the register i and used by the delay module i to determine delay duration of the delay module i.

Optionally, each AFE chip is integrated with a number of analog-to-digital converters equal to the number of cells in the corresponding battery unit, and each analog-to-digital converter corresponds to one cell for synchronous detection of its cell voltage.

The present disclosure also provides a battery management system , including n battery units, n AFE chips and a master controller, n is a natural number greater than 1; the n AFE chips are coupled respectively with the n battery units, and the first to n-th AFE chips are cascaded in a daisy chain; after the first AFE chip receives first broadcast command information from the master controller, the first broadcast command information is sequentially transmitted to the second to the n-th AFE chips through cascading communication; the response information from the n-th to first AFE chips is transmitted to the master controller through the cascading communication; characterized in that
an i-th AFE chip further comprises a delay module i; and the i-th AFE chip executes second broadcast command information, after the i-th AFE chip receives the second broadcast command information and delays for the i-th delay time tdi by the delay module i; and the n-th AFE chip executes the second broadcast command information at the time point when receiving the second broadcast command information; wherein, 1 <, i < n, the second broadcast command information is a voltage sampling command to ensure approximately synchronous voltage sampling timings of the first to n-th AFE chips;
wherein the i-th delay time tdi is generated according to the broadcast command information.

Optionally, an i-th AFE chip comprises a transmission delay calculation module i, which calculates transmission delay according to the time point tit when the i-th AFE chip transmits the first broadcast command information and the time point tir when it receives the response information, and calculates the i-th delay time tdi based on a first time T1; where 1 ≤ i < n. the first time T1 represents a time difference between the time point when the n-th AFE chip receives the first broadcast command information and the time point tnt when it transmits the response information;

Optionally, the i-th delay timed = (T2-T1)/2, where T2 is a time difference between the time point tir and the time point tit.

Optionally, the i-th AFE chip further comprises a register i, and the first time T1 is a preset time and is stored in the register i.

Optionally, each AFE chip is integrated with a number of analog-to-digital converters equal to the number of cells in the corresponding battery unit, and each analog-to-digital converter corresponds to one cell for synchronous detection of its cell voltage.

The present disclosure achieves at least the following beneficial effects:

The present disclosure provides the AFE chip with synchronous voltage sampling function and the battery management system. The battery management system includes n battery units, n AFE chips and master controller, n is a natural number greater than 1. The n AFE chips are coupled with respectively the n battery unit, and the first to n-th AFE chips are cascaded in a daisy chain. After the first AFE chip receives first broadcast command information from the master controller, the first broadcast command information is sequentially transmitted to the second to the n-th AFE chips through cascading communication. Response information from the n-th to the first AFE chips is transmitted to the master controller through the cascading communication. An i-th AFE chip calculates an i-th delay time tdi according to the time point tit when the i-th AFE chip transmits first broadcast command information and the time point tir when it receives response information, and according to a first time T1; where 1 ≤ i < n. The first time T1 represents a time difference between the time point when the n-th AFE chip receives the first broadcast command information and the time point tnt when it transmits the response information. When the master controller transmits second broadcast command, the i-th AFE chip executes the second broadcast command information after receiving the second broadcast command information and delaying for the i-th delay time tdi; and the n-th AFE chip executes the second broadcast command information at the time point when receiving the second broadcast command information. The second broadcast command information is a voltage sampling command to ensure approximately synchronous voltage sampling timings of the first to n-th AFE chips. Synchronous voltage sampling can improve the accuracy of battery parameters calculated from the sampled data. This avoids impacts on battery life or health state.

Further, the i-th delay time tdi = (T2-T1)/2, where T2 is a time difference between the time point tir and the time point tit. The first time T1 can be set to a preset time. This is used to reduce the design difficulty arising from the difference between the time point when the n-th AFE chip transmits response information directly and the time point when the n-th AFE chip receives the first broadcast command information.

Further, each AFE chip is integrated with a number of analog-to-digital converters equal to the number of cells in the corresponding battery unit, and each analog-to-digital converter corresponds to one cell for synchronous detection of its cell voltage. This is used to achieve synchronous detection of the corresponding cell voltages and improve the accuracy of voltage sampling.

It should be noted that the foregoing general description and the following detailed description are exemplary and explanatory only and do not limit the present disclosure.

### BRIEF DESCRIPTION OF THE DRAWINGS

FIG. 1 shows a schematic diagram of a battery management system according to the prior art;
FIG. 2 shows a schematic diagram of a battery management system according to the present disclosure;
Fig.3 shows a schematic diagram of synchronous voltage sampling timings according to the present disclosure;
FIG. 4 shows a schematic diagram of an internal structure of the AFE chip AFE1 based on the principles in FIG. 2, according to the present disclosure;
FIG. 5 shows a schematic diagram of a battery management system based on the principles in FIG. 2, which extends to n AFE chips;
FIG. 6 shows a schematic diagram of an internal structure of the i-th AFE chip according to the present disclosure.

### DETAILED DESCRIPTION

In order to facilitate the understanding of the present disclosure, a more comprehensive description of the present disclosure will be given below with reference to the relevant accompanying drawings. Preferred embodiments of the present disclosure are given in the accompanying drawings. However, the present disclosure may be implemented in different forms and is not limited to the embodiments described herein. Rather, the purpose of providing these embodiments is to provide a more thorough and comprehensive understanding of the disclosure of the present disclosure.

The principle of synchronous voltage sampling implemented by the present disclosure will be described based on the structure shown in FIG. 1. As shown in FIG. 1, the battery management system further includes a master controller, where the master controller includes an MCU and a chip AFE0. The chip AFE0 is used to transmit command information issued by the MCU to n AFE chips being cascaded, and to transmit response information of the n AFE chips to the MCU. The setting of AFE0 may be determined in view of actual requirements. When the first AFE chip receives first broadcast command information from the master controller, the first broadcast command information is sequentially transmitted to the second to n-th AFE chip through cascading communication; After that, the response information from the n-th to first AFE chip is transmitted to the master controller through the cascading communication.

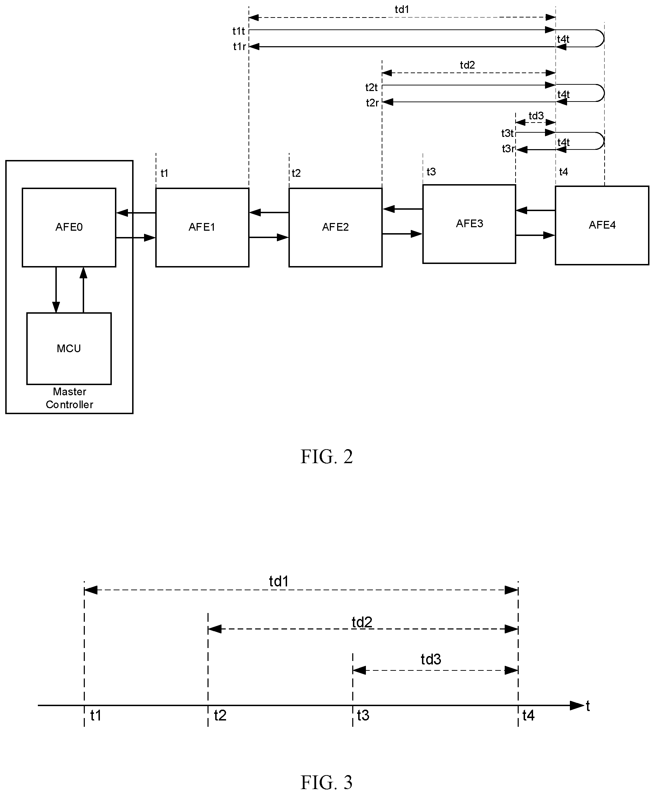

FIG. 2 shows a schematic diagram of a battery management system with synchronous voltage sampling function according to the present disclosure. Here, the battery management system includes 4 AFE chips as an example, that is, the value of n is 4 in FIG. 1. In FIG. 2, t1t represents the time point when the chip AFE1 transmits the first broadcast command information, and t1r represents the time point when it receives the response information of the chip AFE4; similarly, t2t represents the time point when the chip AFE2 transmits the first broadcast command information, and t2r represents the time point when it receives the response information of the chip AFE4; t3t represents the time point when the chip AFE3 transmits the first broadcast command information, and t3r represents the time point when it receives the response information of the chip AFE4; t4t represents the time point when the chip AFE4 transmits its response information after receiving and internally processing the first broadcast command information. Here, the chip AFE1 calculates the first delay time td1 according to the time point t1t, the time point tir and the first time T1; the chip AFE2 calculates the second delay time td2 according to the time point t2t, the time point t2r and the first time T1; the chip AFE3 calculates the third delay time td3 according to the time point t3t, the time point t3r and the first time T1; wherein the first time T1 represents a time difference between the time point t4t and the time point when the chip AFE4 receives the first broadcast command information (for example, this time point can be denoted as t4' ).

Further, FIG. 3 shows a schematic diagram of synchronous voltage sampling timings according to the present disclosure. In FIGs. 2-3, the time points t1, t2, t3, and t4 respectively represent the time points when the chip AFE1 to AFE4 receive the second broadcast command information. After receiving the second broadcast command information at time point t1, the chip AFE1 executes the second broadcast command information after the first delay time td1. Similarly, after receiving the second broadcast command information at time point t2, the chip AFE2 executes the second broadcast command information after the second delay time td2. After receiving the second broadcast command information at time point t3, the chip AFE3 executes the second broadcast command information after the third delay time td3. After receiving the second broadcast command information at time point t4, the chip AFE4 executes the second broadcast command information. Here, the second broadcast command information is a voltage sampling command, and the first broadcast command information is a command which is not the voltage sampling command. With the above settings, t1 + td1 = t2 + td2 = t3 + td3 = t4 may be achieved, that is, voltage sampling of the chips AFE1 to AFE4 may be performed approximately at the same time point, and thus improving the accuracy of battery parameters calculated from the sampled data. This avoids impacts on battery life or health state.

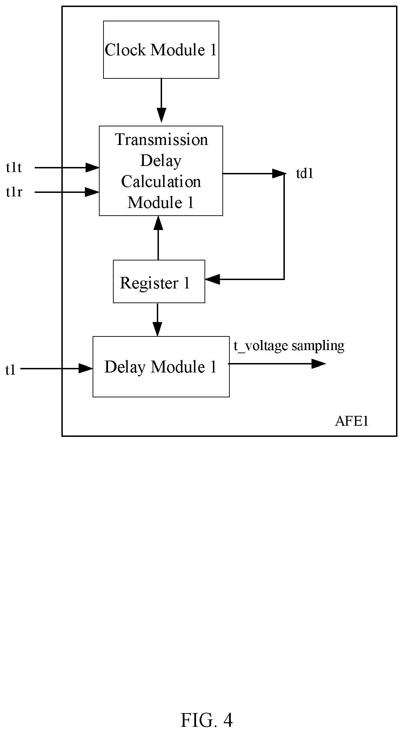

Further, FIG. 4 shows a schematic diagram of an internal structure of the chip AFE1 according to the present disclosure. The internal structures of the chips AFE2-AFE3 are the same as that of the chip AFE1. Here, the chip AFE1 is taken as an example to illustrate. The principle of obtaining the first delay time td1 is illustrated with reference to FIG. 4. The first time T1 may be a preset time, or a time difference between the time point t4t when the chip AFE4 transmits its response information and the time point t4' when it receives the first broadcast command information. Taking the first time T1 which is a preset time as an example, there is a register1 inside the chip AFE1, and the preset time is stored in the register 1. The chip AFE1 is also provided with a transmission delay calculation module1, a clock module1 and a delay module 1. The transmission delay calculation module 1 receives the time point t1t when the chip AFE1 transmits the first broadcast command information and the time point tir when it receives the response information of the chip AFE4. The chip AFE1 extract the first time T1 from the register 1 (i.e. the preset time, which may be determined in view of the actual requirements, for example, it may be determined to be a time difference close to equal to the time difference between the time point t4t when the chip AFE4 transmits its response information and the time point t4' when it receives the first broadcast command information). The transmission delay calculation module 1 calculates the first delay time td1 according to the time point t1r, the time point t1t and the first time T1. Specifically, td1 = (T2-T1)/2, where T2 is the time difference between the time point tir and the time point tit. Because the chip AFE4 needs a processing time before transmitting its response information and after receiving the first broadcast command information, the processing time is included in the time period between the time point tir and the time point tit. The processing time should be considered when calculating the first delay time td1. The first time T1 may be regarded as the processing time. Here, the clock module 1 is used to generate a clock signal, and based on the clock signal, it can be used to calculate the corresponding time. For example, for the time difference between the time point t1r and the time point t1t, it can be calculated based on the number of clock signal pulses passed, and the corresponding time is calculated by multiplying the duration of the clock signal cycle by the number of pulses. Other time duration may also be calculated in this way. After the transmission delay calculation module 1 calculates the first delay timetd1, it can be stored in the register 1. After receiving the second broadcast command information at the time point t1, that is, after receiving a voltage sampling command, the first delay time td1 is retrieved from the register 1. The delay module 1 executes the voltage sampling command after delaying for the first delay time td1 after the time point t1. It should be noted that FIG. 4 only illustrates one of the embodiments, which can also be modified accordingly to achieve the same function.

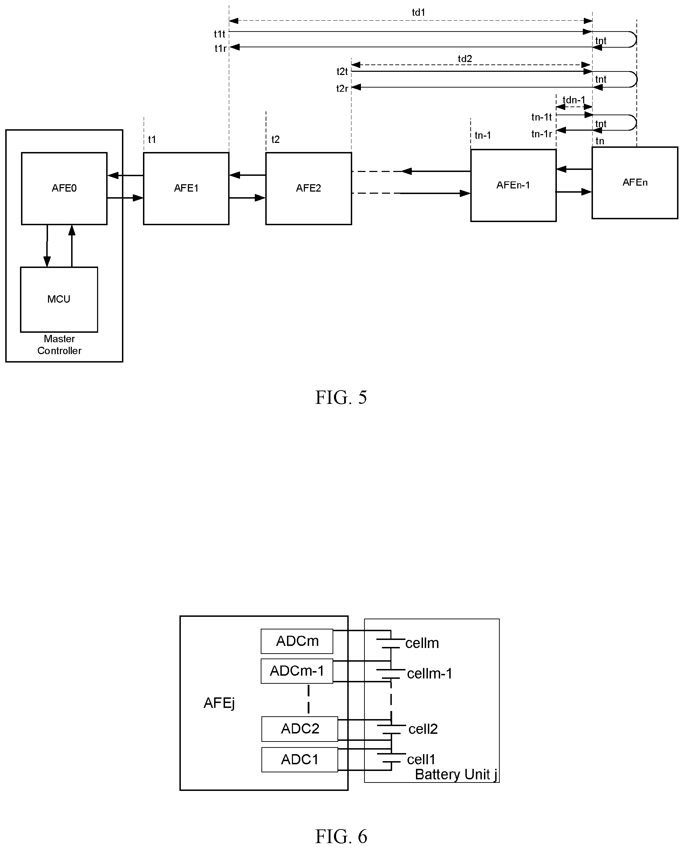

Further, FIG. 5 shows a schematic diagram of a battery management system with synchronous voltage sampling function when the AFE chips are extended to n. The specific working principle is the same as that in FIG. 2, which will not be described in detail here.

Further, in order to improve the accuracy of voltage sampling, FIG. 6 shows a schematic diagram of the internal structure of the chip AFEj, where 1 ≤ j ≤ n. For example, the battery unit j includes m cells, i.e. cell1, cell2... cellm-1, cellm. The value of m can be set in view of an actual application. M analog-to-digital converters ADC1, ADC2... ADCm-1, ADCm are correspondingly provided in the chip AFEj. The m analog-to-digital converters correspond to the m cells one by one, to detect corresponding cell voltages. In the present disclosure, synchronous sampling of m cells can be realized by the m analog-to-digital converters which correspond to the m cells one by one. Compared with the conventional application in which multiple cells shares one ADC, the voltage sampling of the m cells may be performed at the same moment, which improves the accuracy of the voltage sampling.

To sum up, the present disclosure provides the AFE chip with synchronous voltage sampling function and the battery management system. The battery management system includes n battery units, n AFE chips and master controller, where n is a natural number greater than 1. The n AFE chips are coupled respectively with the n battery cells, and the first to nth AFE chips are cascaded in a daisy chain, and two adjacent AFE chips may communicate with each other in two directions. After the first AFE chip receives first broadcast command information from the master controller, the first broadcast command information is sequentially transmitted to the second to the n-th AFE chips through cascading communication. Response information from the n-th to the first AFE chips is transmitted to the master controller through the cascading communication. An i-th AFE chip calculates an i-th delay time tdi according to the time point tit when the i-th AFE chip transmits first broadcast command information and the time point tir when it receives response information, and according to a first time T1; where 1 ≤ i < n; The first time represents a time difference between the time point when the n-th AFE chip receives the first broadcast command information and the time point tnt when the n-th AFE chip transmits n its response information; When the master controller sends second broadcast command, the i-th AFE chip executes the second broadcast command information after receiving the second broadcast command information and delaying for the i-th delay time tdi; and the n-th AFE chip executes the second broadcast command information at the time point when receiving the second broadcast command information. The second broadcast command information is a voltage sampling command to ensure approximately synchronous voltage sampling timings of the first to n-th AFE chips. Synchronous voltage sampling can improve the accuracy of battery parameters calculated from the sampled data. This avoids impacts on battery life or health state.

Further, the i-th delay time tdi = (T2-T1)/2, where T2 is a time difference between the time point tir and the time point tit. The first time T1 can be set to a preset time. This is used to reduce the design difficulty arising from the difference between the time point when the n-th AFE chip transmits response information directly and the time point when the n-th AFE chip receives the first broadcast command information.

Further, each AFE chip is integrated with a number of analog-to-digital converters equal to the number of cells in the corresponding battery unit, and each analog-to-digital converter corresponds to one cell for synchronous detection of its cell voltage. This is used to achieve synchronous detection of the corresponding cell voltages and improve the accuracy of voltage sampling.

Finally, it should be noted that: obviously, the above-described examples are merely illustrative of the present disclosure and are not intended to be limiting of the embodiments. For those of ordinary skill in the art, other variations or changes in different forms may be made on the basis of the above description. There is no need and no way to exhaust all the embodiments here. The obvious changes or variations thus derived are still within the scope of the present disclosure.

## Claims

1. An AFE chip with synchronous voltage sampling function, applied in a battery management system, which includes n battery units, n AFE chips, and a master controller, where n is a natural number greater than 1; the n AFE chips are coupled respectively with the n battery units, and the first to the n-th AFE chip are cascaded in a daisy chain; after the first AFE chip receives first broadcast command information from the master controller, the first broadcast command information is sequentially transmitted to the second to the n-th AFE chip through cascading communication; the response information from the n-th to the first AFE chip is transmitted to the master controller through the cascading communication, **characterized in that**:
an i-th AFE chip comprises a transmission delay calculation module i, which calculates an i-th delay time tdi according to the time point tit when the i-th AFE chip transmits the first broadcast command information and the time point tir when it receives the response information, and according to a first time T1; where 1 ≤ i < n; the first time T1 represents a time difference between the time point when the n-th AFE chip receives the first broadcast command information and the time point tnt when it transmits the response information;
the i-th AFE chip further comprises a delay module i; and the i-th AFE chip executes second broadcast command information, after the i-th AFE chip receives the second broadcast command information and delays for the i-th delay time tdi by the delay module i; and the n-th AFE chip executes the second broadcast command information at the time point when receiving the second broadcast command information; the second broadcast command information is a voltage sampling command to ensure approximately synchronous voltage sampling timings of the first to n-th AFE chips.

2. The AFE chip according to claim 1, **characterized in that**: the i-th delay time tdi = (T2-T1)/2, where T2 is a time difference between the time point tir and the time point tit.

3. The AFE chip according to claim 2, **characterized in that**:
the i-th AFE chip further comprises a register i, and the first time T1 is a preset time and is stored in the register i.

4. The AFE chip according to claim 3, **characterized in that**: after obtaining the i-th delay time tdi, it is stored in the register i;
when the i-th AFE chip receives the second broadcast command information, the i-th delay time tdi is retrieved from the register i and used by the delay module i to determine delay duration of the delay module i.

5. The AFE chip according to claim 1, **characterized in that**: each AFE chip is integrated with a number of analog-to-digital converters equal to the number of cells in the corresponding battery unit, and each analog-to-digital converter corresponds to one cell for synchronous detection of its cell voltage.

6. A battery management system, including n battery units, n AFE chips and a master controller, n is a natural number greater than 1; the n AFE chips are coupled respectively with the n battery units, and the first to the n-th AFE chip are cascaded in a daisy chain; after the first AFE chip receives first broadcast command information from the master controller, the first broadcast command information is sequentially transmitted to the second to the n-th AFE chip through cascading communication; the response information from the n-th to the first AFE chip is transmitted to the master controller through the cascading communication, **characterized in that**:
an i-th AFE chip further comprises a delay module i; and the i-th AFE chip executes second broadcast command information, after the i-th AFE chip receives the second broadcast command information and delays for the i-th delay time tdi by the delay module i; and the n-th AFE chip executes the second broadcast command information at the time point when receiving the second broadcast command information; wherein, 1 ≤ i < n, the second broadcast command information is a voltage sampling command to ensure approximately synchronous voltage sampling timings of the first to n-th AFE chips;
wherein the i-th delay time tdi is generated according to the broadcast command information.

7. The battery management system according to claim 6, **characterized in that**: the i-th AFE chip comprises a transmission delay calculation module i, which calculates an i-th delay time tdi according to the time point tit when the i-th AFE chip transmits the first broadcast command information and the time point tir when it receives the response information, and according to a first time T1; wherein the first time T1 represents a time difference between the time point when the n-th AFE chip receives the first broadcast command information and the time point tnt when it transmits the response information.

8. The battery management system according to claim 7, **characterized in that**: the i-th delay time tdi = (T2-T1)/2, where T2 is a time difference between the time point tir and the time point tit.

9. The battery management system according to claim 8, **characterized in that**: the i-th AFE chip further comprises a register i, and the first time T1 is a preset time and is stored in the register i.

10. The battery management system according to claim 6, **characterized in that**: each AFE chip is integrated with a number of analog-to-digital converters equal to the number of cells in the corresponding battery unit, and each analog-to-digital converter corresponds to one cell for synchronous detection of its cell voltage.
